# EUROPÄISCHE PATENTANMELDUNG

(11) **EP 1 457 937 A1**
(43) Veröffentlichungstag der Anmeldung: **15.09.2004**
(21) Anmeldenummer: 04005562.6
(22) Anmeldetag: 09.03.2004
(51) Int. Cl.: G07F 7/10, H04L 29/06, G06F 1/00

(54) **Verfahren und Vorrichtung zur sicheren Internet-basierten Kommunikation zwischen tragbaren Datenträgern**

(30) Priorität: 10.03.2003 DE 10310350
(71) Anmelder: Giesecke & Devrient GmbH, 81677 München (DE)
(72) Erfinder: Ciesinger, Daniel, 80637 München (DE)

(57) **Zusammenfassung**

Bei einem Verfahren zur Kommunikation zwischen mindestens zwei tragbaren Datenträgern (10,10') erfolgt die Kommunikation gemäß mindestens einem Internet-Protokoll. Ein Datenträger ist zur Verwendung in einem solchen Verfahren vorgesehen. Ein Computerprogrammprodukt ist dazu vorgesehen, einen tragbaren Datenträger (10, 10') zur Verwendung in dem genannten Verfahren einzurichten. Eine Schnittstellenvorrichtung (26, 26') ist dazu eingerichtet, einen Kommunikationsweg zwischen einem tragbaren Datenträger (10,10') und dem Internet (28) unter Beibehaltung des mindestens einen von dem Datenträger (10, 10') verwendeten Internet-Protokolls bereitzustellen. Die Erfindung bietet eine Technik zur Kommunikation zwischen tragbaren Datenträgern (10, 10'), die für eine Vielzahl unterschiedlicher Datenträger (10, 10') und eine Vielzahl unterschiedlicher Anwendungsgebiete einsetzbar ist.

## Beschreibung

Die Erfindung betrifft allgemein tragbare Datenträger, wie z.B. Chipkarten (smart cards) oder Chipmodule in unterschiedlichen Bauformen. Spezieller betrifft die Erfindung die Kommunikation zwischen solchen Datenträgern.

In der internationalen Offenlegungsschrift WO 97/02548 A1 ist ein Bezahlsystem offenbart, das auch unter der Marke Mondex bekanntgeworden ist. Bei diesem System kommunizieren zwei Datenträger über ein proprietäres Protokoll miteinander, um eine virtuelle Zahlung von einem zum anderen Datenträger zu übermitteln. Dieses System erfordert jedoch spezielle Hardund Software und ist überdies auf das Gebiet des bargeldlosen Zahlungsverkehrs beschränkt.

Die Erfindung hat die Aufgabe, eine Technik zur Kommunikation zwischen tragbaren Datenträgern bereitzustellen. Vorzugsweise soll die Erfindung für eine Vielzahl unterschiedlicher Datenträger und eine Vielzahl unterschiedlicher Anwendungsgebiete einsetzbar sein.

Erfindungsgemäß wird diese Aufgabe ganz oder zum Teil gelöst durch ein Verfahren mit den Merkmalen von Anspruch 1, einen Datenträger gemäß Anspruch 8, ein Computerprogrammprodukt gemäß Anspruch 9 und eine Schnittstellenvorrichtung gemäß Anspruch 10. Die abhängigen Ansprüche definieren bevorzugte Ausgestaltungen der Erfindung.

Die Erfindung geht von der Grundidee aus, eine Kommunikation zwischen mindestens zwei tragbaren Datenträgern über mindestens ein Internet-Protokoll vorzusehen. In der Vergangenheit ist die Kommunikation zwischen Datenträgern - statt zwischen einem Datenträger und einem Hintergrundsystem - bislang als außergewöhnliches Konzept angesehen worden, das spezielle Hardware und/ oder proprietäre Kommunikationsprotokolle erfordert.

Indem die Erfindung eine Kommunikation zwischen Datenträgern über mindestens ein Internet-Protokoll vorschlägt, eröffnet sie eine Fülle neuer Anwendungsmöglichkeiten. Internet-Protokolle sind weit verbreitet, so daß auf eine Vielzahl bereits vorhandener Implementierungen und Anwendungen zurückgegriffen werden kann. Es sind auch bereits Implementierungen von Internet-Protokollen auf tragbaren Datenträgern bekannt, die jedoch nicht zur Kommunikation zwischen mindestens zwei Datenträgem vorgesehen sind.

Die Erfindung ist universell einsetzbar. Bevorzugte Anwendungsgebiete der Erfindung sind die Übertragung von Kontaktdaten, wie z.B. Namen, Adreßdaten und elektronischen Visitenkarten, und/oder die Übertragung von Finanztransaktionsdaten, wie z.B. Kontonummern, zu entrichtenden Beträgen, elektronischen Tickets und Gutscheinen und/oder die Übertragung von Schlüsseldaten, wie z.B. öffentlichen Schlüsseln für die gesicherte Kommunikation per E-Mail.

Vorzugsweise ist mindestens eines der verwendeten Internet-Protokolle ein gesichertes Internet-Protokoll. Ein derartiges gesichertes Internet-Protokoll sieht - in unterschiedlichen Weiterbildungen der Erfindung - eine verschlüsselte Datenübertragung oder eine Authentisierung zumindest eines Kommunikationspartners oder beides vor. Die Authentisierung gibt dem Inhaber des Datenträgers die Gewißheit, daß unzulässige Kommunikationspartner abgewiesen werden. Zur Authentisierung können an sich bekannte Techniken, wie z.B. Zertifikate oder Challenge-Response-Verfahren, eingesetzt werden.

Die verschlüsselte Datenübertragung ist insbesondere dann vorteilhaft, wenn zwischen den Datenträgern vertrauliche Informationen, wie z.B. Kontodaten oder Schlüssel, ausgetauscht werden. Vorzugsweise wird für die verschlüsselte Datenübertragung zwischen den Datenträgern ein Sitzungsschlüssel vereinbart. Es ist vorteilhaft, auch bei der Vereinbarung des Sitzungsschlüssels auf einen zuverlässigen Ausspähungsschutz zu achten. Zu diesem Zweck kann z.B. vorgesehen sein, daß einer der Datenträger den Sitzungsschlüssel erzeugt und diesen dann mit einem öffentlichen Schlüssel des anderen Datenträgers verschlüsselt und an den anderen Datenträger sendet. Der Sitzungsschlüssel wird dadurch vor einem unbefugten Lauscher verborgen gehalten.

In bevorzugten Ausgestaltungen erfolgt die Kommunikation über mindestens eines der Internet-Protokolle TCP/ IP (Transmission Control Protocol / Internet Protocol), UDP/IP (User Datagram Protocol / Internet Protocol), IPSec (IP Security Protocol), TLS (Transport Layer Security), SSL (Secure Sockets Layer), HTTP (Hypertext Transfer Protocol) und S-HTTP (Secure HTTP), wobei die Protokolle IPSec, TLS, SSL und S-HTTP als Beispiele für gesicherte Internet-Protokolle angesehen werden. Die genannten Protokolle sind an sich gut bekannt und in den entsprechenden RFC-Normen bzw. anderen Dokumenten im Detail beschrieben. Die Protokolle als solche sind nicht Gegenstand der vorliegenden Erfindung.

Vorzugsweise wird für die Kommunikation nicht nur ein einziges Internet-Protokoll eingesetzt, sondern ein Internet-Protokollstapel, der mehrere aufeinander aufbauende Internet-Protokolle aufweist. Jeder Datenträger enthält in diesem Fall eine Implementierung des gesamten Protokollstapels. Beispielsweise kann der Protokollstapel TCP/ IP für die Transport- und Netzwerkschicht, SSL für eine auf die Transportschicht aufgesetzte Sicherungsschicht und HTTP für eine auf die Sicherungsschicht aufgesetzte Anwendungsschicht vorsehen. SSL kann abhängig von der Anwendung auch auf HTTP aufgesetzt werden.

Der Datenträger ist bevorzugt eine übliche Chipkarte oder ein Chipmodul, die/ das beispielsweise gemäß der Norm ISO/ IEC 7816 ausgestaltet sein kann. Eine Kommunikation solcher Datenträger miteinander ist bislang nicht üblich. Während des Kommunikationsvorgangs dient vorzugsweise einer der beteiligten Datenträger als Client und der andere als Server. Weiterhin dient der Client gegenüber einem Browser als Server.

Das erfindungsgemäße Computerprogrammprodukt ist dazu vorgesehen, einen tragbaren Datenträger zur Verwendung in dem erfindungsgemäßen Verfahren einzurichten. Ein derartiges Computerprogrammprodukt kann ein körperliches Medium sein, beispielsweise ein Halbleiterspeicher oder eine Diskette oder eine CD-ROM. Das Computerprogrammprodukt kann jedoch auch ein nicht-körperliches Medium sein, beispielsweise ein über ein Computernetzwerk übermitteltes Signal. Insbesondere kann das Computerprogrammprödukt ein Datenträger-Betriebssystem oder ein Teil davon sein und bei der Herstellung oder Initialisierung oder Personalisierung des Datenträgers verwendet werden.

Die erfindungsgemäße Schnittstellenvorrichtung stellt einen Kommunikationsweg zwischen einem erfindungsgemäßen Datenträger und dem Internet bereit. Darin wird das mindestens eine von dem Datenträger verwendete Internet-Protokoll transportiert. Auf physischer Ebene - und in bevorzugten Ausgestaltungen auch auf mindestens einer unteren logischen Ebene - sorgt die Schnittstellenvorrichtung für die erforderlichen Anpassungen.

Der tragbare Datenträger, das Computerprogrammprodukt und die Schnittstellenvorrichtung weisen in bevorzugten Weiterbildungen Merkmale auf, die den oben erwähnten und/ oder den in den abhängigen Verfahrensansprüchen genannten Merkmalen entsprechen.

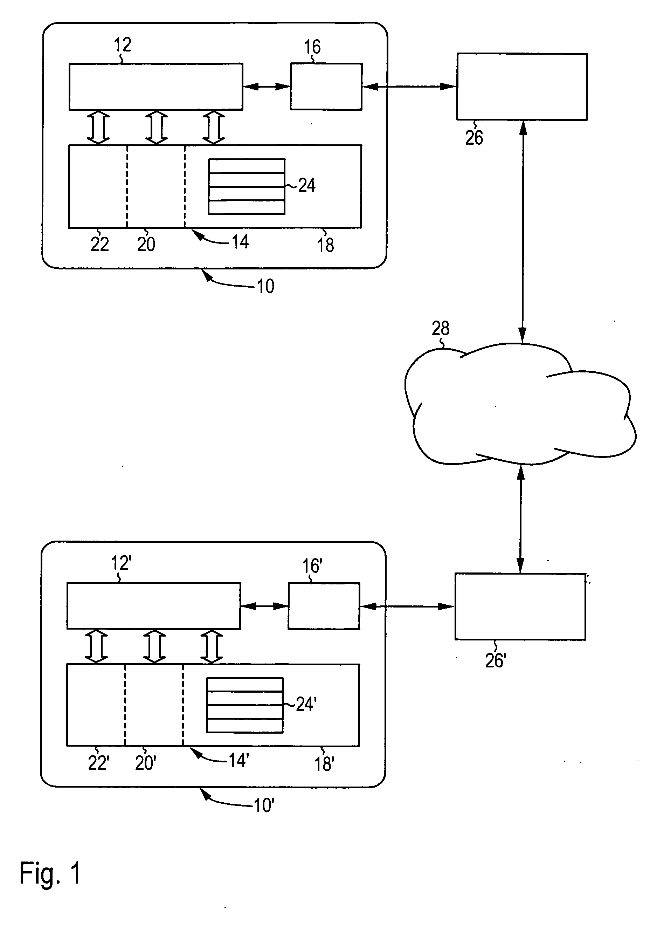

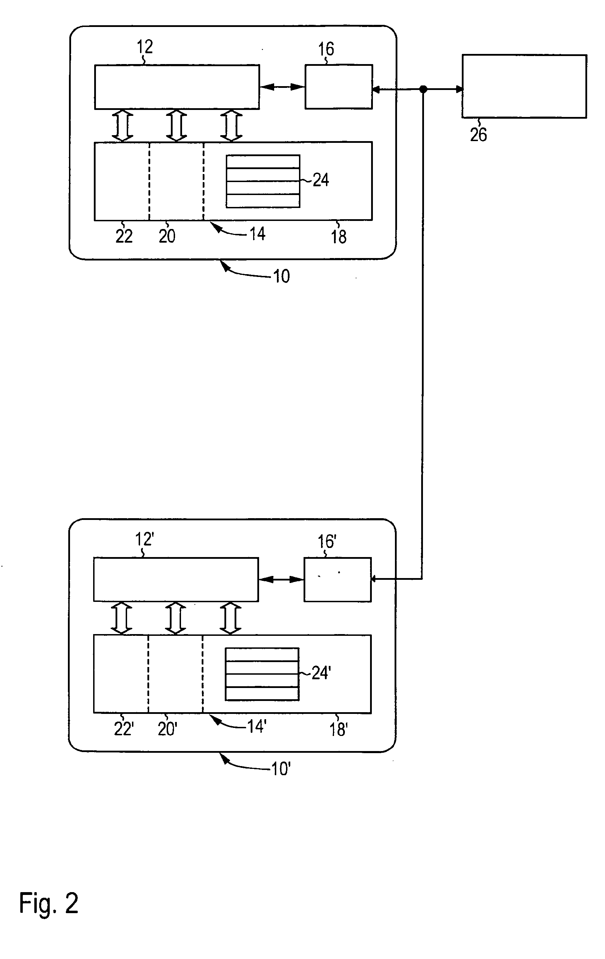

Weitere Merkmale und Vorteile der Erfindung ergeben sich aus der folgenden Beschreibung zu den Figuren 1 und 2. Es zeigen:
Fig. 1 ein Blockdiagramm zweier über das Internet miteinander kommunizierender Datenträger, und
Fig. 2 ein Blockschaltbild zweier über ein lokales Netzwerk kommunizierender Datenträger.

Die beiden in der Fig. 1 dargestellten tragbaren Datenträger 10,10' sind beispielsweise als Chipkarten oder als kompakte Chipmodule ausgebildet. In an sich bekannter Weise weisen die Datenträger 10,10' je einen Halbleiterchip auf, auf dem ein Prozessorkern 12,12', ein Speicher 14,14' und eine Schnittstelle 16,16' zur drahtgebundenen oder drahtlosen Kommunikation ausgebildet sind. Der Speicher 14,14' jedes der Datenträger 10, 10' ist jeweils in mehrere Abschnitte untergliedert, nämlich im vorliegenden Ausführungsbeispiel in einen als maskenprogrammiertes ROM ausgestalteten Festwertspeicher 18, 18', einen als EEPROM ausgestalteten beschreibbaren Speicher 20, 20' und einen als RAM ausgestalteten Arbeitsspeicher 22, 22'.

In an sich bekannter Weise enthält der Festwertspeicher 18, 18' ein Betriebssystem und Anwendungsprogramme zur Ausführung durch den Prozessorkern 12, 12' des Datenträgers 10,10'. Insbesondere ist je ein Internet-Protokollmodul 24, 24' vorgesehen, das einen Internet-Protokollstapel implementiert. Der beschreibbare Speicher 20, 20' dient zur nicht-flüchtigen Aufnahme von Werten und enthält überdies Teile des Betriebssystems und der Anwendungsprogramme, die während der Komplettierung oder Initialisierung in den Datenträger 10,10' geladen wurden. In dem flüchtigen Arbeitsspeicher 22, 22' werden Werte während der Programmlaufzeit zwischengespeichert.

Jeder der Datenträger 10, 10' ist über je eine Schnittstellenvorrichtung 26, 26' mit dem einem Netzwerk 28, z.B. dem Internet gekoppelt. Die Schnittstellenvorrichtung 26, 26' kann ein eigenständiges Gerät sein, in das der Datenträger 10,10' eingeschoben oder eingelegt wird und dasbeispielsweise über eine Telefonleitung oder einen DSL-Anschluß - Zugang zum Netzwerk 28 hat. In einer Ausführungsalternative wird die Schnittstellenvorrichtung 26, 26' von einem geeignet programmierten persönlichen Computer (PC) gebildet, der einen extern angeschlossenen oder integrierten Kartenleser aufweist. Die Schnittstellenvorrichtung 26, 26' kann eine Benutzerschnittstelle zur Bedienung des jeweiligen Datenträgers 10, 10' und zur Anzeige von Rückmeldungen an den Benutzer bereitstellen. Die Kommunikation zwischen dem Datenträger 10,10' und der jeweils zugeordneten Benutzerschnittstelle kann ebenfalls über mindestens ein Internet-Protokoll erfolgen.

Im Betrieb kommunizieren die Datenträger 10, 10' über die jeweiligen Schnittstellenvorrichtungen 26, 26' und das Netzwerk 28 miteinander. Die Kommunikation erfolgt dabei gemäß den aufeinander aufbauenden Internet-Protokollen, die von den jeweiligen Internet-Protokollmodulen 24, 24' bereitgestellt werden. Hierbei arbeitet einer der Datenträger 10, 10' als Server und der andere als Client. Der Client arbeitet zudem als Server gegenüber dem Rechner, der den Vorgang auslöst. Die Schnittstellenvorrichtungen 26, 26' stellen für den jeweiligen Datenträger 10,10' den Zugang zum Netzwerk 28 bereit und führen die erforderlichen Anpassungen auf physischer Ebene (physical layer) und auf mindestens einer unteren Protokollschicht - z.B. der Anschlußebene (data link layer) - durch. Die von den Datenträgern 10, 10' gesendeten und empfangenen Internet-Datenpakete gemäß den eingesetzten Internet-Protokollen werden jedoch von den Schnittstellenvorrichtungen 26, 26' nicht verändert.

Im hier beschriebenen Ausführungsbeispiel werden die Internet-Protokolle TCP/IP für die Transport- und Netzwerkschicht und HTTP für die Anwendungsschicht verwendet, wobei auf die Transportschicht eine Sicherungsschicht, die SSL verwendet, aufgesetzt ist. Die Schnittstellenvorrichtungen 26, 26' vermitteln den TCP/IP-gestütäten Datenaustausch der Datenträger 10,10' über das Netzwerk 28. In Ausführungsalternativen werden andere Internet-Protokolle, wie z.B. IPSec, TLS oder UDP, zum Datenaustausch und insbesondere zur Sicherung der Datenübertragung eingesetzt.

Bei dem hier beschriebenen Ausführungsbeispiel wird HTTP zur Kommunikation zwischen den Datenträgern 10,10' verwendet. Für den Fall, daß eine gesicherte Sitzung aufgebaut werden soll, kann auch SSL als gesichertes Internet-Protokoll verwendet werden.

Die Kommunikation eines ersten Datenträgers 10 mit einem zweiten Datenträger 10' wird beispielsweise von der Schnittstelle 26, d.h. einem ersten Computer gestartet, indem eine Anforderung an den Datenträger 10 ausgegeben wird. Eine entsprechende Kommunikationsanforderung wird an den Server des Netzwerks 28 und über die Schnittstelle 26' an den Datenträger 10' gegeben. Der Datenträger 10' übermittelt die angeforderten Daten an die Karte 10, wobei die Datenübertragung über die Schnittstellen 26 und 26' erfolgt.

Die Figur 2 zeigt ein Blockschaltbild zweier über ein lokales Netzwerk kommunizierender Datenträger. Der erste Datenträger 10 ist über ein lokales Netzwerk (LAN) oder direkt über ein Lesegerät mit der Schnittstelle 26, vorzugsweise einem PC verbunden. Der zweite Datenträger 10' ist ebenfalls direkt oder über ein lokales Netzwerk mit dieser Schnittstelle 26 verbunden. Über die Schnittstelle 26 wird eine Anforderung zur Eröffnung der Kommunikation an den ersten Datenträger 10 gegeben, der wiederum eine Aktion, beispielsweise die Abfrage von Daten, gegenüber dem zweiten Datenträger 10' veranlasst. Der zweite Datenträger 10' antwortet auf die Abfrage beispielsweise mit der Übersendung von angeforderten Daten. Die Kommunikation wird mit einem Bestätigungssignal, z.B. in Form einer Antwortseite des ersten Datenträgers an die Schnittstelle 26 abgeschlossen.

Zur Erhöhung der Sicherheit kann vorgesehen werden, daß sich beispielsweise zunächst der zweite Datenträger 10' (Server) bei dem ersten Datenträger 10 (Client) und dann der Client gegenüber dem Server authentisiert. Für diese Authentisierung können z.B. von einer vertrauenswürdigen Stelle signierte Zertifikate und/ oder ein Challenge-Response-Verfahren eingesetzt werden. Abhängig von der gewünschten Anwendung kann auch eine Authentisierung nur eines der Kommunikationspartner genügen, oder die Authentisierung kann ganz weggelassen werden.

Nach erfolgreicher Authentisierung erfolgt die zu den Fig. 1 und 2 beschriebene eigentliche Kommunikation der Datenträger 10, 10'. Alle Kommunikationsvorgänge werden im hier beschriebenen Ausführungsbeispiel mit dem vereinbarten Sitzungsschlüssel verschlüsselt und damit gegen Ausspähung geschützt. Es können nun vertrauliche Daten, z.B. Adreßdaten oder Finanztransaktionsdaten, manipulations- und ausspähungsgeschützt übertragen werden. In manchen Anwendungsgebieten ist eine solche gesicherte Datenübertragung nicht erforderlich. Es kann dann auf die Verschlüsselung - und gegebenenfalls auch auf die oben beschriebene Schlüsselvereinbarung - verzichtet werden.

## Patentansprüche

1. Verfahren zur Kommunikation zwischen mindestens zwei tragbaren Datenträgern (10, 10'), **dadurch gekennzeichnet, daß** die Kommunikation gemäß mindestens einem Internet-Protokoll erfolgt.

2. Verfahren nach Anspruch 1, **dadurch gekennzeichnet, daß** die Kommunikation zwischen den Datenträgern 10,10' von extern, vorzugsweise von der Schnittstelle 26, 26' initiiert wird.

3. Verfahren nach Anspruch 1 oder 2, **dadurch gekennzeichnet, daß** die Kommunikation gemäß mindestens einem gesicherten Internet-Protokoll erfolgt, das eine verschlüsselte Datenübertragung und/ oder eine Authentisierung zumindest eines Kommunikationspartners vorsieht.

4. Verfahren nach einem der Ansprüche 1 bis 3, **dadurch gekennzeichnet, daß** die Kommunikation gemäß mindestens einem der Internet-Protokolle TCP/ IP, UDP/ IP, IPSec, TLS, SSL, HTTP und S-HTTP erfolgt.

5. Verfahren nach einem der Ansprüche 1 bis 4, **dadurch gekennzeichnet, daß** die Kommunikation gemäß einem Internet-Protokollstapel mit mehreren aufeinander aufbauenden Internet-Protokollen erfolgt.

6. Verfahren nach einem der Ansprüche 1 bis 5, **dadurch gekennzeichnet, daß** einer der Datenträger (10, 10') als Server und der andere der Datenträger (10, 10') als Client dient.

7. Verfahren nach einem der Ansprüche 2 bis 6, **dadurch gekennzeichnet, daß** der Server (10, 10') gegenüber der Schnittstelle (26, 26') als Client dient.

8. Verfahren nach einem der Ansprüche 1 bis 7, **dadurch gekennzeichnet, daß** mindestens einer der Datenträger (10, 10') eine Chipkarte oder ein Chipmodul gemäß ISO/IEC 7816 ist.

9. Verfahren nach einem der Ansprüche 1 bis 8, **dadurch gekennzeichnet, daß** das Verfahren zur Übertragung von Kontaktdaten und/ oder Finanztransaktionsdaten und/ oder Schlüsseldaten dient.

10. Datenträger (10, 10'), insbesondere Chipkarte oder Chipmodul, der zur Verwendung in einem Verfahren nach einem der Ansprüche 1 bis 8 vorgesehen ist.

11. Computerprogrammprodukt, das dazu vorgesehen ist, einen tragbaren Datenträger (10, 10') zur Verwendung in einem Verfahren nach einem der Ansprüche 1 bis 8 einzurichten.

12. Schnittstellenvorrichtung (26, 26'), die dazu eingerichtet ist, einen Kommunikationsweg zwischen einem tragbaren Datenträger (10, 10') nach Anspruch 9 und dem Internet (28) unter Beibehaltung des mindestens einen von dem Datenträger (10, 10') verwendeten Internet-Protokolls bereitzustellen.
